# EUROPÄISCHE PATENTANMELDUNG

(11) **EP 1 176 055 A1**
(43) Veröffentlichungstag der Anmeldung: **30.01.2002**
(21) Anmeldenummer: 01115261.8
(22) Anmeldetag: 23.06.2001
(51) Int. Cl.: B60R 1/07, B60R 1/076

(54) **Aussenrückspiegel für Fahrzeuge, insbesondere Kraftfahrzeuge**

(30) Priorität: 27.07.2000 DE 10036592
(71) Anmelder: Reitter & Schefenacker GmbH & Co. KG, 73730 Esslingen (DE)
(72) Erfinder: Secanu, Florin, 72622 Nürtingen (DE)
(74) Vertreter: Jackisch-Kohl, Anna-Katharina

(57) **Zusammenfassung**

Beim Außenrückblickspiegel (1) werden in den Spiegelkopf (3) elektrische Leitungen zu elektrischen Verbrauchern im Spiegelkopf (3), wie eine Heizung für das Spiegelglas oder ein Spiegelglasantrieb, geführt. Damit diese Leitungen beim Abklappen des Spiegelkopfes (3) gegenüber dem Spiegelfuß (2) nicht stören, besteht die Leitung aus zwei über Steckerteile (8, 9) miteinander lösbar verbundenen Leitungsabschnitten. Beim Abklappen des Spiegelkopfes (3) werden die Steckerteile (8, 9) voneinander gelöst und beim Zurückklappen selbsttätig zusammengesteckt. Der Außenspiegel (1) ist insbesondere für Kraftfahrzeuge vorgesehen.

## Beschreibung

Die Erfindung betrifft einen Außenrückblickspiegel für Fahrzeuge, insbesondere Kraftfahrzeuge, nach dem Oberbegriff des Anspruches 1.

Bei bekannten Außenrückblickspiegeln dieser Art kann der Spiegelkopf aus der Gebrauchslage in die Parkstellung in Fahrtrichtung nach hinten geschwenkt werden. Der Spiegelkopf kann aber auch bei Schlageinwirkung in Fahrtrichtung nach vorn gegenüber dem Spiegelfuß verschwenkt werden. Nachteilig ist hierbei, daß bei dieser Abklappbewegung auch die elektrischen Leitungen zum elektrischen Verbraucher im Spiegelkopf, wie eine Heizung für das Spiegelglas oder ein elektrischer Antrieb für die Spiegelglasverstellung, entsprechende Bewegungen mitmachen müssen.

Der Erfindung liegt die Aufgabe zugrunde, einen Außenrückblickspiegel dieser Art so auszubilden, daß beim Verschwenken des Spiegelkopfes gegenüber dem Spiegelfuß die elektrischen Leitungen im Außenrückblickspiegel nicht stören.

Diese Aufgabe wird bei einem Außenrückblickspiegel der gattungsbildenden Art erfindungsgemäß mit den kennzeichnenden Merkmalen des Anspruches 1 gelöst.

Infolge der lösbar miteinander verbundenen Steckerteile zwischen den Leitungsabschnitten sind bei den möglichen Schwenkbewegungen des Spiegelkopfes gegenüber dem Spiegelfuß zwischen diesen beiden Teilen keine Leitungen vorhanden, die die Schwenkbewegung stören könnten. Die Steckerteile werden bei einer Schwenkbewegung des Spiegelkopfes vielmehr voneinander gelöst und beim Zurückschwenken des Spiegelkopfes in die Gebrauchslage wieder selbsttätig zusammengesteckt. Dadurch kann auf konstruktiv einfache Weise die erforderliche Leitungsverbindung wiederhergestellt werden.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:
- Fig. 1: eine Draufsicht auf einen erfindungsgemäßen Außenrückblickspiegel mit einem Spiegelkopf und einem Spiegelfuß in der Gebrauchslage des Spiegelkopfes,
- Fig. 2: eine Darstellung entsprechend Fig. 1 mit dem Spiegelkopf in abgeklappter Lage,
- Fig. 3: in vergrößerter und schematischer Darstellung eine zwischen dem Spiegelkopf und dem Spiegelfuß vorgesehene Steckverbindung für eine elektrische Leitung mit zwei Steckerteilen,
- Fig. 4 bis 8: die beiden Steckerteile der Steckverbindung gemäß Fig. 3 in jeweils unterschiedlichen Stellungen zueinander und in verkleinerter Darstellung,
- Fig. 9: eine Kontaktzunge und einen Kontaktstift der Steckerteile gemäß Fig. 6 in schematischer Darstellung.

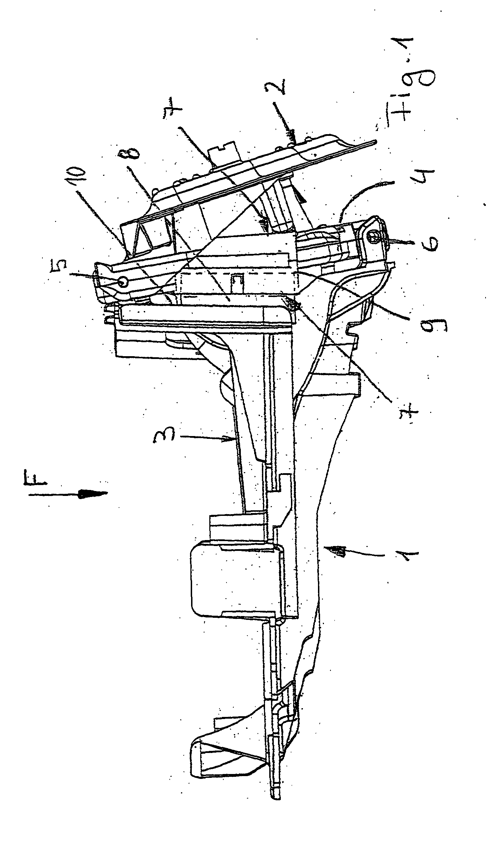

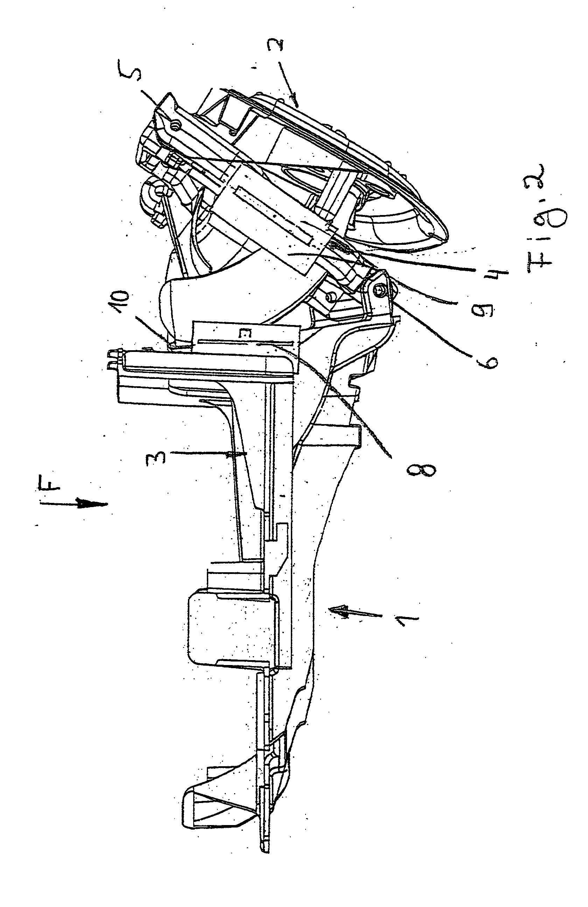

Die Fig. 1 und 2 zeigen einen Außenrückblickspiegel 1 mit einem Spiegelfuß 2 und einem Spiegelkopf 3, in dem ein (nicht dargestelltes) Spiegelglas verstellbar angeordnet ist. Der Außenrückblickspiegel 1 ist über den Spiegelfuß 2 am (nicht dargestellten) Kraftfahrzeug befestigt. Am Spiegelfuß 2 ist ein Zwischengelenk 4 schwenkbar gelagert, das zwei Schwenkachsen 5 und 6 aufweist, um die der Spiegelkopf beim Abklappen bzw. bei einem auf den Spiegel wirkenden Schlag schwenken kann. Wenn der Spiegelkopf 3 aus seiner in Fig. 1 dargestellten Gebrauchslage gegen Fahrtrichtung F nach hinten in die Parkstellung verschwenkt wird, schwenkt der Spiegelkopf 3 um die Achse 5 des Zwischengelenkes 4. Der Spiegelkopf 2 kann aber auch unter Schlageinwirkung in Fahrtrichtung F nach vorn in die in Fig. 2 dargestellte Lage verschwenkt werden. Hierbei schwenkt der Spiegelkopf 3 um die Achse 6 gegenüber dem Zwischengelenk 4. Bei dieser Schwenkbewegung rastet der Spiegelkopf 3 in bekannter Weise an der gegenüberliegenden Achse 5 aus dem Zwischengelenk 4 aus (Fig. 2).

Im Spiegelkopf 3 des Außenrückblickspiegels 1 ist ein (nicht dargestellter) Motor zum Verstellen des Spiegelglases untergebracht. Darüberhinaus können im Spiegelkopf 3 weitere elektrische Verbraucher, wie eine Heizung für das Spiegelglas, Leuchtmittel und dgl., untergebracht sein. Um sie mit elektrischem Strom zu versorgen, sind Leitungen 11, 12 durch den Spiegelfuß 2 in den Spiegelkopf 3 geführt.

Damit die Leitungen 11, 12 beim Abklappen oder Verschwenken des Spiegelkopfes 3 die jeweilige Bewegung mitmachen können und dabei den Schwenkvorgang nicht beeinträchtigen, bestehen die Leitungen aus zwei Leitungsabschnitten 11 und 12 (Fig. 3), von denen der eine im Spiegelfuß 2 und der andere im Spiegelkopf 3 angeordnet ist. Die beiden Leitungsabschnitte 11 und 12 sind über eine Steckverbindung 7 miteinander verbunden. Sie besteht aus zwei Steckerteilen 8 und 9, von denen das eine Teil begrenzt schwenkbar am Zwischengelenk 4 und das andere fest im Bereich der dem Spiegelfuß 2 gegenüberliegenden Stirnfläche 10 des Spiegelkopfes 3 angeordnet ist.

Das schwenkbar am Zwischengelenk 4 gelagerte Steckerteil 9 ist als Steckerbuchse ausgebildet, in die das feste Steckerteil 8 des Spiegelkopfes 3 eingreift, wenn der Spiegelkopf 3 seine Gebrauchslage gemäß Fig. 1 einnimmt.

Die Steckerbuchse 9 hat eine Trägerplatte 22, in der Steckerstifte 13 und 16 sitzen. Sie greifen bei geschlossener Steckverbindung 7 in Steckaufnahmen 17 bis 20 im Steckerteil 8 ein. Der Steckerstift 16 (Fig. 9) hat einen Bund 25, mit dem er in oder an der Trägerplatte 22 gehalten wird. Sämtliche Steckerstifte sind entsprechend ausgebildet und stehen nicht über den Mantel 23 der Steckerbuchse 9 vor. Auch die Steckaufnahmen 17 bis 20 sind untereinander gleich und haarnadelfömig ausgebildet (Fig. 9). Nahe dem Einsteckende sind die beiden Kontaktzungen 20', 20" der Steckaufnahme 20 mit nach innen gerichteten v-förmigen Kontaktabschnitten 37, 38 versehen, die bei geschlossener Steckverbindung 7 unter Vorspannung an den Stekkerstiften 13 bis 16 anliegen. Die Steckaufnahmen 17 bis 20 sind sicher im Steckerteil 8 gehalten. An die Steckerstifte 13 bis 16 und an die Steckaufnahmen 17 bis 20 sind Leiterdrähte 30 bis 33 und 43 bis 46 angeschlossen.

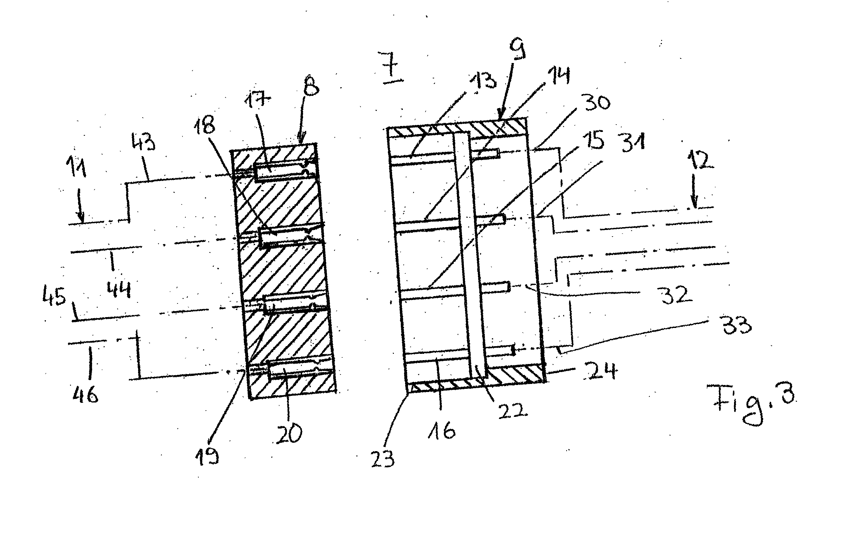

Nimmt der Spiegelkopf 3 seine Gebrauchslage ein (Fig. 1), sind die beiden im Querschnitt vorzugsweise rechteckigen Steckerteile 8, 9 ineinandergesteckt (Fig. 7). Über die geschlossene Steckverbindung 7 werden die elektrischen Verbraucher im Spiegelfuß 3 mit dem notwendigen Strom versorgt. Wird der Spiegelkopf 3 in Fahrtrichtung F (Fig. 2) abgeklappt, rastet er aus der Schwenkachse 5 des Zwischengelenkes 4 aus und schwenkt um die Achse 6 des Zwischengelenkes. Bei dieser Schwenkbewegung werden die beiden Steckerteile 8, 9 voneinander gelöst. Das eine Steckerteil 9 schwenkt beim Abklappen des Spiegelkopfes 3 um eine mittlere, parallel zur Schwenkachse 6 liegende Achse 41, so daß die beiden Steckerteile 8, 9 beim Abklappen des Spiegelkopfes 3 zuverlässig voneinander gelöst werden. Die gelöste Stellung der Steckverbindung 7 ist in Fig. 4 dargestellt, in der die Schwenkachse 41 des Steckerteiles 9 angedeutet ist.

Wird der Spiegelkopf 3 in seine Gebrauchslage zurückgeschwenkt, trifft das Steckerteil 8 auf das Steckerteil 9 am Zwischengelenk 4 (Fig. 5). Da das Steckerteil 9 begrenzt schwenkbar ist, wird es beim Auftreffen durch das Steckerteil 8 (Fig. 5) durch Schwenken um die Achse 41 gegenüber dem Steckerteil 8 ausgerichtet. Dadurch werden die beiden Steckerteile 8, 9 beim weiteren Zurückschwenken des Spiegelkopfes 3 so weit zusammengeführt, daß die Steckverbindung 7 wieder geschlossen wird.

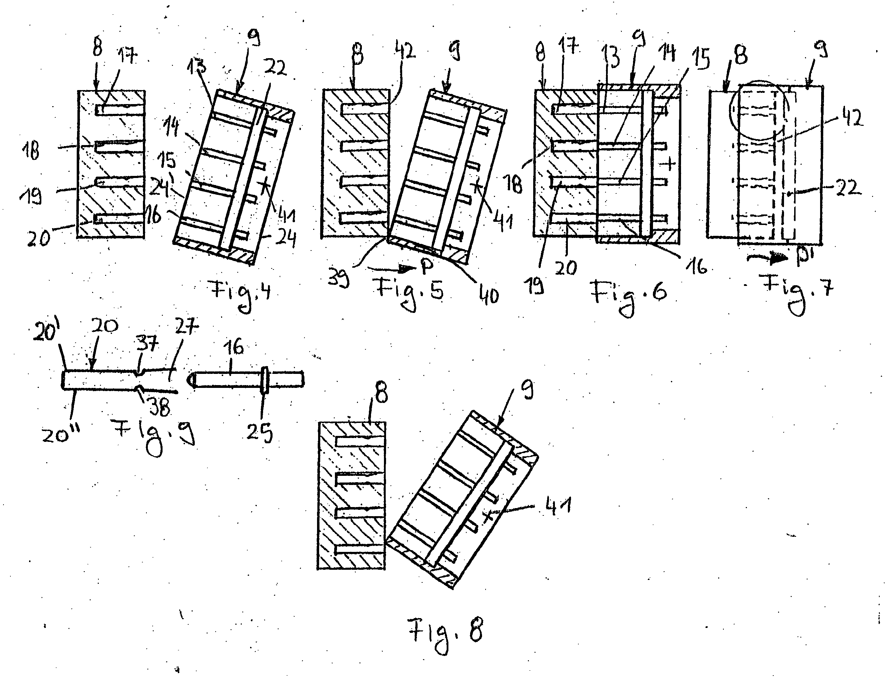

Beim Zurückschwenken des Spiegelkopfes 3 kommt das Steckerteil 8 mit seinem in Schwenkrichtung P vorderen Rand 39 am stirnseitigen Rand 40 des Steckerteiles 9 zur Anlage. Dadurch wird dieses Stekkerteil 9 um seine Achse 41 im Gegenuhrzeigersinn so weit verschwenkt, bis es die in Fig. 6 dargestellte Lage einnimmt, in der die Steckerstifte 13 bis 16 mit den Steckaufnahmen 17 bis 20 fluchten. Die Steckerteile 8 und 9 werden dann zuverlässig zusammengesteckt (Steckrichtung P' in Fig. 7). In der Endstellung liegt das Stekkerteil 8 mit seiner dem Steckerteil 9 zugewandten Stirnseite 42 an der Trägerplatte 22 an.

Da das Steckerteil 9 nur begrenzt um die Achse 41 schwenkbar ist, wird sichergestellt, daß das Steckerteil 9 nicht so weit um die Achse 41 schwenkt, daß die beiden Steckerteile 8, 9 beim Zurückschwenken des Spiegelkopfes 3 nicht mehr zusammengesteckt werden können.

## Patentansprüche

1. Außenrückblickspiegel für Fahrzeuge, insbesondere Kraftfahrzeuge, mit einem am Fahrzeug zu befestigenden Spiegelfuß und einem ein Spiegelglas tragenden, gegenüber dem Spiegelfuß in wenigstens einer Richtung abklappbaren Spiegelkopf, mit mindestens einer elektrischen Leitung, die durch den Spiegelfuß zu wenigstens einem elektrischen Verbraucher im Spiegelkopf geführt ist,
**dadurch gekennzeichnet, daß** die Leitung (11, 12) aus mindestens einem im Spiegelfuß (2) und einem im Spiegelkopf (3) angeordneten Leitungsabschnitt (11 und 12) besteht, die über Steckerteile (8 und 9) miteinander verbunden sind, die beim Abklappen des Spiegelkopfes (3) voneinander gelöst und beim Zurückklappen des Spiegelkopfes (3) selbsttätig zusammengesteckt werden.

2. Spiegel nach Anspruch 1,
**dadurch gekennzeichnet, daß** das eine Steckerteil (8) an dem dem Spiegelfuß (2) benachbarten Endbereich des Spiegelkopfes (3) und das andere, vorteilhaft an einem Zwischengelenk (4) des Spiegels gelagerte Steckerteil (9) im Bereich des Spiegelfußes (2) vorgesehen sind.

3. Spiegel nach Anspruch 1 oder 2,
**dadurch gekennzeichnet, daß** das andere Steckerteil (9) eine Steckaufnahme hat, in die das eine Steckerteil (8) des Spiegelkopfes (3) in der Gebrauchslage des Spiegels (1) gesteckt ist.

4. Spiegel nach einem der Ansprüche 1 bis 3,
**dadurch gekennzeichnet, daß** das spiegelkopfseitige Steckerteil (8) mindestens eine, vorzugsweise mehrere mit gleichem Abstand nebeneinanderliegende und vorteilhaft durch die Schenkel eines im wesentlichen U-förmigen Kontaktstückes (17 bis 20) gebildete Kontaktzungen (20', 20") aufweist.

5. Spiegel nach Anspruch 4,
**dadurch gekennzeichnet, daß** die Kontaktzungen (20', 20") mit Abstand von ihrem freien Ende eine, vorteilhaft durch mindestens eine, vorzugsweise zwei einander gegenüberliegende Verformungen der Kontaktzungen (20', 20") gebildete Verengung (37, 38) aufweisen.

6. Spiegel nach einem der Ansprüche 1 bis 5,
**dadurch gekennzeichnet, daß** das andere Steckerteil (9) mindestens zwei, vorzugsweise mehrere mit gleichem Abstand nebeneinanderliegende Steckerstifte (13 bis 16) aufweist, die vorteilhaft in einem Träger (22), vorzugsweise einer Trägerplatte, des Steckerteiles (9) gehalten sind.

7. Spiegel nach Anspruch 6,
**dadurch gekennzeichnet, daß** mindestens eines der Steckerteile (8, 9) schwenkbar angeordnet ist.

8. Spiegel nach Anspruch 7,
**dadurch gekennzeichnet, daß** das am Zwischengelenk (4) angeordnete Steckerteil (9) um eine Achse (41) schwenkbar ist.

9. Spiegel nach Anspruch 7 oder 8,
**dadurch gekennzeichnet, daß** das schwenkbar angeordnete Steckerteil (9) in der abgeklappten Lage des Spiegelkopfes (3) anschlagbegrenzt ist.

10. Spiegel nach einem der Ansprüche 1 bis 9,
**dadurch gekennzeichnet, daß** das eine Steckerteil (9) als Hohlkörper ausgebildet ist.
